## Europäisches Patentamt

## European Patent Office

## Office européen des brevets

(11) Veröffentlichungsnummer: **0 242 670**
**B1**

(12) # EUROPÄISCHE PATENTSCHRIFT

(45) Veröffentlichungstag der Patentschrift:
**18.01.89**

(51) Int. Cl.⁴: **G03B 42/04**

(21) Anmeldenummer: **87104967.2**

(22) Anmeldetag: **03.04.87**

(54) Lichtdichte, aufreissbare Umhüllung für Stapel von fotografischen oder röntgenologischen Blattfilmen.

(30) Priorität: **16.04.86 DE 3612710**

(43) Veröffentlichungstag der Anmeldung:
**28.10.87 Patentblatt 87/44**

(45) Bekanntmachung des Hinweises auf die Patenterteilung:
**18.01.89 Patentblatt 89/3**

(84) Benannte Vertragsstaaten:
**BE FR GB IT SE**

(56) Entgegenhaltungen:
**DE-A- 2 513 673**
**DE-A- 2 515 841**
**DE-B- 1 019 169**

(73) Patentinhaber: **Agfa-Gevaert AG, Patentabteilung,**
**D-5090 Leverkusen 1(DE)**

(72) Erfinder: **Schmidt, Manfred, Dipl.-Ing., Ligusterweg 34,**
**D-8011 Kirchheim(DE)**
Erfinder: **Peeters, Dirk, Konijnenveld 55,**
**B-2550 Kontich(BE)**
Erfinder: **Wollaert, Emiel, Karel de Preterlei 140,**
**B-2200 Antwerpen(BE)**
Erfinder: **Zanner, Johann, Albert-Schweitzer-Strasse 1a,**
**D-8025 Unterhaching(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft eine lichtdichte, aufreißbare Umhüllung für Stapel fotografischer oder röntgenologischer Blattfilme zum Einsetzen in ein Vorratsmagazin eines Blattfilmkassetten-Beladegerätes, wobei das Vorratsmagazin an der der aufreißbaren Umhüllungsseite gegenüberliegenden Seite eine Abziehvorrichtung, vorzugsweise eine Aufwickelvorrichtung, zum Entfernen der Umhüllung durch Angreifen an einer Aufwickellasche nach dem Verschließen des Vorratsmagazins aufweist und wobei eine umgeschlagene Verschlußlasche der Umhüllung mit einer Umhüllungsflachseite mittels eines Klebebandes verklebt ist.

Blattfilmstapel mit derartigen Umhüllungen sind im Handel erhältlich. Dabei muß die Umhüllung in einer Dunkelkammer geöffnet und der der Umhüllung entnommene Filmpack in das Vorratsmagazin eingelegt werden. Demgegenüber wird heute angestrebt, einen lichtdicht in der Umhüllung angeordneten Filmpack bei Tageslicht in ein Vorratsmagazin einzulegen und nach dem Schließen des Magazins die Hülle zu öffnen und vom Filmpack abzuziehen.

Ein Vorratsmagazin dieser Art ist durch die DE-GMS 7 725 804 bekannt. Dabei wird die Aufreißlasche der Umhüllung durch die labyrinthartig ineinandergefalteten Enden der Flachseiten der Umhüllung gebildet, wobei die Faltung unter dem Zug, den die Aufwickelvorrichtung beim Drehen auf die Aufwickellasche ausübt, auseinandergerissen werden soll, so daß die Umhüllung dann vom Stapel beim weiteren Drehen der Aufwickelvorrichtung abgezogen und aufgewickelt werden soll. Es hat sich jedoch herausgestellt, daß der aufbringbare Kraftaufwand an der Aufwickelvorrichtung nicht ausreicht, um die Aufreißlasche tatsächlich auseinanderzureißen. Somit ist diese bekannte Anordnung für einen Tageslichtbetrieb, also für das Beladen des Magazins und Öffnen der Umhüllung im wieder geschlossenen Magazin nicht brauchbar.

Durch die DE-PS 3 405 423 sind Vorratsmagazine ähnlicher Art bekannt geworden. Der eine der hier gezeigten Magazintypen setzt zum Öffnen der Stapelumhüllung das Zusammenwirken mit der Vorrichtung, in der das Magazin verwendet werden soll, voraus und ist daher nur in besonders ausgestalteten Vorrichtungen und nicht allgemein verwendbar. Beim anderen hier beschriebenen Magazintyp liegen die Verhältnisse so wie beim Magazin nach der DE-GMS 7 725 804, nur mit dem Unterschied, daß die gefaltete Aufreißlasche der Umhüllung nicht durch Aufwicklung der Aufwickellasche, sondern durch Ziehen an der Aufwickellasche von Hand erfolgen muß. Die Kraft zum Aufreißen der gefalteten Aufreißlasche ist aber praktisch kaum aufzubringen.

Schließlich ist in der nicht vorveröffentlichten DE-OS 3 543 024 ein Vorratsmagazin beschrieben, das eine messer- oder sägeähnliche Abreißleiste für die Aufreißlasche von Filmpackumhüllungen nach dem Schließen des Magazins aufweist. Diese Ausbildung stellt nicht nur einen zusätzlichen Aufwand am Vorratsmagazin dar. Sie hat den Nachteil, daß eine Tageslichtbeladung eben nur bei entsprechend ausgebildeten Magazinen möglich ist, während Filmpacks zum Beladen der verschiedensten Arten von bekannten Magazinen, z.B. auch nach der DE-GMS 7 725 804, bei Tageslicht brauchbar sein sollen.

Der Erfindung liegt daher die Aufgabe zugrunde, eine Umhüllung der eingangs genannten Art für einen Filmpack so auszubilden, daß der die Umhüllung verschließende Verschluß einerseits reißfest ist und daß er oft erhebliche Gewichte der in den Umhüllungen befindlichen Filmpacks aushält, andererseits aber vor dem Schließen eines Vorratsmagazins in einen die Umhüllung immer noch lichtdicht verschließenden Zustand bringbar ist, in dem die an einer Abziehvorrichtung, vorzugsweise Aufwickelvorrichtung, eines Magazins aufzubringende Kraft ausreicht, um den Verschluß bei geschlossenem Magazin voll zu öffnen und die Umhüllung vom Stapel zu entfernen.

Diese Aufgabe wird alternativ gelöst durch die Merkmale der beiden Ansprüche 1 und 4. Weitere vorteilhafte Merkmale der Erfindung sind den Unteransprüchen entnehmbar.

Mit der Erfindung wird erreicht, daß beim teilweisen Entfernen des Klebebandes, nämlich an der nicht verklebten Übergangsstelle zwischen der umgeschlagenen Verschlußlasche und der zugeordneten Umhüllungsflachseite, eine schwächere Verbindungsanordnung zwischen Verschlußlasche und Umhüllungsflachseite bestehen bleibt, die die Umhüllung noch lichtdicht verschlossen hält, aber nach dem Schließen eines Vorratsmagazins durch dessen Abziehvorrichtung mit geringen Kräften aufreißbar ist.

Die Erfindung wird anhand von Zeichnungen näher erläutert. Es zeigen

Fig. 1 eine maßstäbliche, abgebrochene, perspektivische Darstellung einer erfindungsgemäßen Filmpackhülle,

Fig. 2 eine perspektivische Darstellung einer Filmpackhülle nach Figur 1 beim Einlegen in ein Vorratsmagazin,

Fig. 3 einen abgebrochenen Schnitt durch ein geöffnetes Vorratsmagazin mit eingelegter, ungeöffneter, erfindungsgemäßer Filmpackhülle,

Fig. 4 den Schnitt nach Figur 3 beim Aufreißen eines Verschlußteiles der Filmpackhülle,

Fig. 5 den Schnitt nach den Figuren 3 und 4 nach dem Schließen des Vorratsmagazins beim Entfernen der Filmpackhülle,

Fig. 6 eine abgebrochene perspektivische Darstellung einer anderen erfindungsgemäßen Ausgestaltung eines Filmpackhüllen-Verschlusses,

Fig. 7 eine abgebrochene perspektivische Darstellung einer weiteren erfindungsgemäßen Ausgestaltung eines Filmpackhüllen-Verschlusses.

Es wurden bereits Vorratsmagazine verwendet, die aus einer oben nur teilweise offenen Box 2a und einem als Schieberrohr 2b ausgebildeten Deckel bestehen. Die Eingabeöffnung 2c der Box 2a liegt dabei der in Eingaberichtung 3 des Magazins 2 in eine Kassettenbeladevorrichtung liegenden Stirnseite 2h der Box 2a benachbart. Die Eingabeöffnung 2c ist nur so groß, daß ein Filmstapel 1 oder Filmpack in die Box 2a einsetzbar und darin positionierbar ist und daß sie im vorgeschobenen Zustand des Schieberrohrs 2b durch dieses lichtdicht verschließbar ist. Die in Eingaberichtung 3 rückwärtige Magazinstirnseite 2d kann als Griffteil zum Einschieben des Magazins 2 in eine Beladevorrichtung und zum Entnehmen aus ihr ausgebildet sein. Die rückwärtige Magazinstirnseite 2d ist als abklappbare, in ihrem angeklappten Zustand lichtdicht schließende Rückwand ausgebildet. In ihr oder unmittelbar hinter ihr im Innern der Box 2a ist eine Aufwickelwelle 6 an den Seitenwänden gelagert. Sie weist Befestigungsmittel auf, mit denen eine Aufwickellasche 4a einer neu eingelegten Umhüllung 4 eines Filmstapels 1 an der Aufwickelwelle 6 zu befestigen ist. Die Aufwickelwelle 6 kann direkt oder über Zahnräder mit einer lichtdicht aus der Box 2a nach außen geführten Aufwickelkurbel 10 gekuppelt sein. Letztere kann ein klappbares, nicht gezeigtes Gelenk aufweisen, so daß sie in die gezeigte Funktionsstellung oder in eine in eine Vertiefung 2e der Rückwand 2d eingeschwenkte Nichtgebrauchslage schwenkbar ist. Letztere Nichtgebrauchslage soll sie beim Einsetzen des Magazins 2 in eine Beladevorrichtung einnehmen.

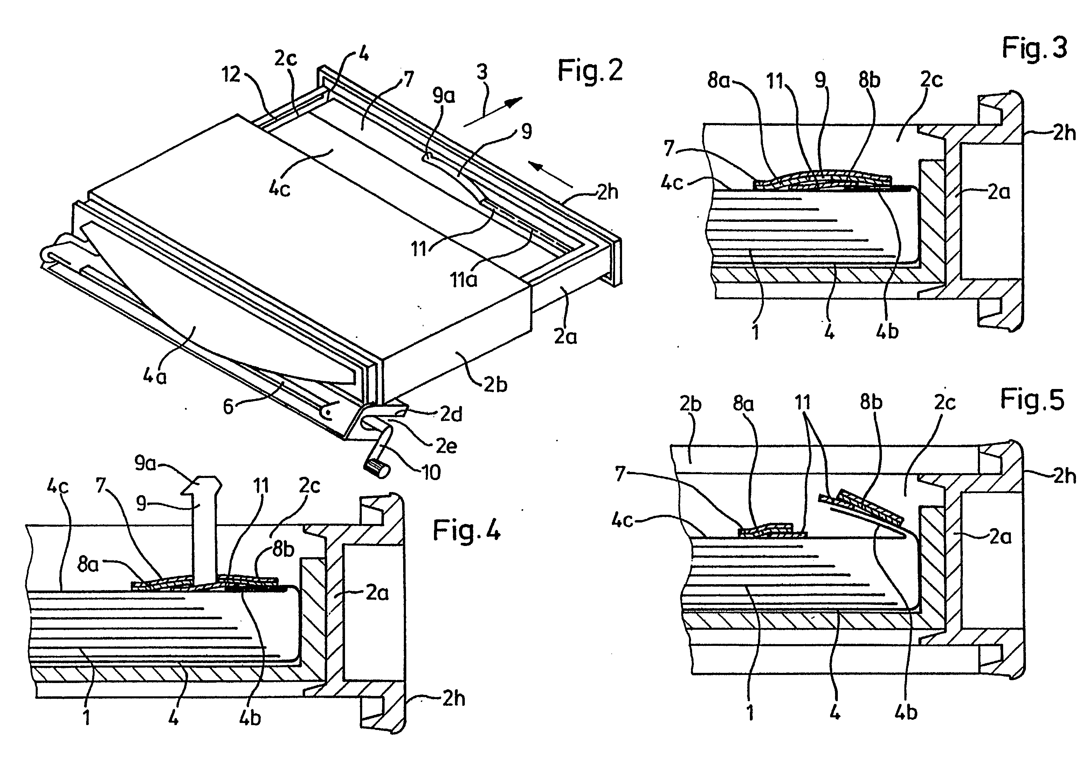

Zur Wiederbeladung eines Magazins 2 werden sowohl die Eingabeöffnung 2c durch Öffnen des Schieberdeckels 2b als auch die Aufwickelwelle 6 durch Öffnen der Rückwand 2d freigelegt. Dann werden von der Aufwickelwelle 6 die dort aufgewickelte Umhüllung 4 des bereits entnommenen Filmstapels abgezogen und aus der Box ein unter dem entleerten Stapel vorgesehener Versteifungs- und Haltekarton 12 entnommen. Letzterer weist an der Rückseite einen hochstehenden Anschlag auf. Der Haltekarton 12 samt Anschlag dient dazu, beim Abziehen der Hülle 4 vom Stapel 1 in einem geschlossenen Magazin 2 eine Verschiebung des Stapels 1 oder einzelner seiner Blätter durch Mitnahme durch die Umhüllung 4 zu verhindern. Gemäß den Figuren 2 und 3 wird ein neuer Filmstapel 1 samt Umhüllung 4 durch die Eingabeöffnung 2c in die Box 2a eingelegt, wobei die Aufwickellasche 4a bis in den Bereich der Aufwickelwelle 6 geführt und an der Aufwickelwelle 6 festgeklemmt wird. Danach wird die Rückwand 2d geschlossen.

Dabei ist die in der vorn noch geöffneten Box 2a liegende Hülle 4 noch völlig verschlossen. Damit sie aber nach dem Schließen des Magazindeckels 2b allein durch Drehen der Kurbel 10 und der Aufwickelwelle 6 aufgerissen und vom Stapel 1 abgezogen werden kann, ist der Verschluß der Hülle 4 besonders ausgebildet.

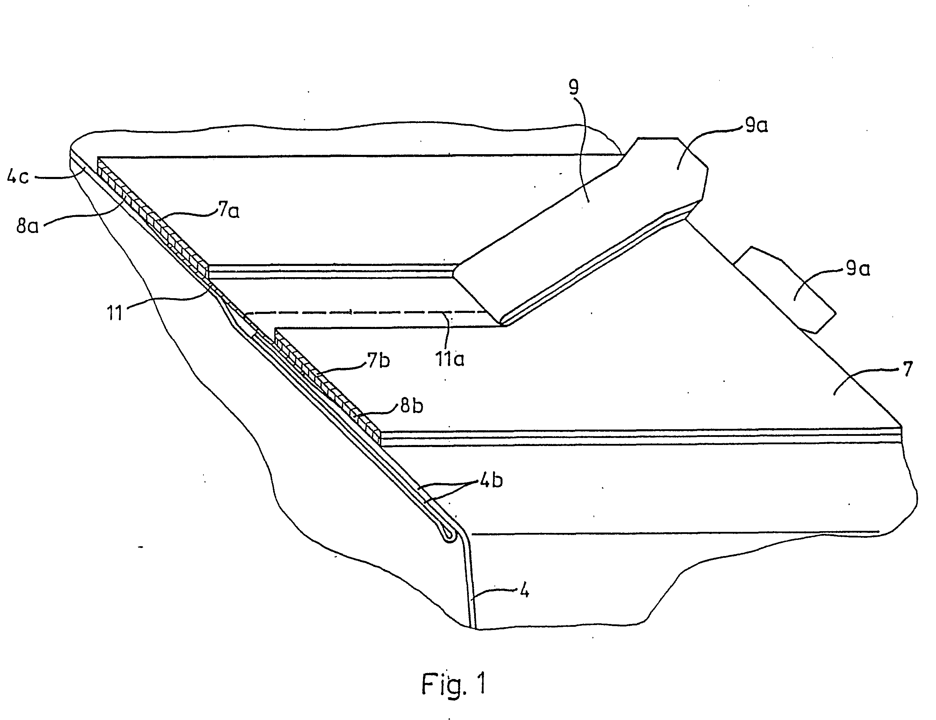

An ihrem zu öffnenden, stirnseitigen Anfang ist ein vorstehender Verschlußlappen 4b in die obenliegende Umhüllungsflachseite 4c umgeschlagen, um dadurch einen Lichtschutz zu bilden. Der Verschlußlappen 4b ist mit der zugeordneten Umhüllungsflachseite 4c nun durch ein besonders ausgebildetes Klebeband 7 verklebt und somit so fest damit verbunden, daß sich diese Verbindung auch beim Tragen des üblicherweise schweren Filmstapels 1 an der Umhüllung 4 nicht lösen kann. Gemäß dem Ausführungsbeispiel nach den Figuren 1 bis 5 ist das Klebeband 7 als glatte, durchgehende Kunststofffläche oder Papier-Kunststoff-Kombination ausgebildet. Es ist seinerseits längs seiner beiden Seitenbereiche 7a, 7b zu einer Einheit verklebt mit zwei voneinander beabstandeten Klebestreifen 8a, 8b, von denen einer mit der Flachseite 4c und der andere über den Verschlußlappen 4b über deren ganze Breite verklebt ist. In den zwischen den voneinander beabstandeten Klebestreifen 8a, 8b liegenden Längsstreifenbereich ist ein Reißband 9 oder eine Reißleine eingelegt, das über die seitlichen Hüllenränder vorstehende Grifflappen 9a aufweisen kann. Unter dem Reißband 9 ist ein Papierstreifen 11 vorgesehen und an seinen äußersten seitlichen Längsbereichen an den Klebestreifen 8a, 8b befestigt. Die Breite des Papierstreifens 11 ist größer als die Breite des Reißbandes 9, aber erheblich kleiner als die Breite des Klebebandes 7, so daß das Klebeband 7 bzw. die damit verbundenen Klebestreifen 8a, 8b ausreichend über den Papierstreifen 11 überstehen, um den Verschlußlappen 4b fest mit der Umhüllungsflachseite 4c zu verkleben. Der Papierstreifen 11 weist eine Längsperforation 11a auf, die im durch die Klebestreifen 8a, 8b nicht verklebten Bereich zwischen Verschlußlappen 4b und Umhüllungsflachseite 4c liegt.

Nach dem Einlegen des Filmstapels 1, 4 in die Box 2a und Schließen der Rückwand 2d wird nun der obere durchgehende Klebestreifen 7 mit dem Reißband 9 über dessen Breite und über die gesamte Klebebandlänge aufgerissen, wie dies in den Figuren 1, 2 und 4 gezeigt ist. Dadurch ist der Verschlußlappen 4b mittels des Papierstreifens 11 immer noch über die gesamte Hüllenbreite mit der Umhüllungsflachseite 4c verklebt und somit weiterhin lichtdicht verschlossen. Nun wird der Deckel 2b über die Öffnung 2c der Box 2a geschoben und somit das Magazin 2 lichtdicht verschlossen.

Der Papierstreifen 11 ist jedoch infolge seiner Perforation 11a so ausgebildet, daß er durch senkrecht zu seiner Länge wirkende, geringe Kräfte leicht längs seiner gesamten Perforation 11a auseinandertrennbar ist. Ist das Magazin 2 geschlossen, so bedarf es nur eines Drehens an der Kurbel 10 und damit an der Aufwickelwelle 6, damit die Perforation 11a des Papierstreifens 11 aufreißt und gemäß Figur 5 der Verschlußlappen 4b hochgezogen wird. Nun erst, in der lichtdicht verschlossenen Stellung des Magazins 2, ist also die Umhüllung 4 des Filmstapels 1 geöffnet und kann mittels der Kurbel 10 vom Filmstapel 1 ganz abgezogen und auf die Aufwickelwelle 6 aufgewickelt werden. Beim erneuten Wechsel des Filmstapels wird die aufgewickelte Hülle 4 dann von der Aufwickelwelle 6 abgezogen und erneut ein Aufwickellappen 4a einer neuen Umhüllung 4 daran befestigt.

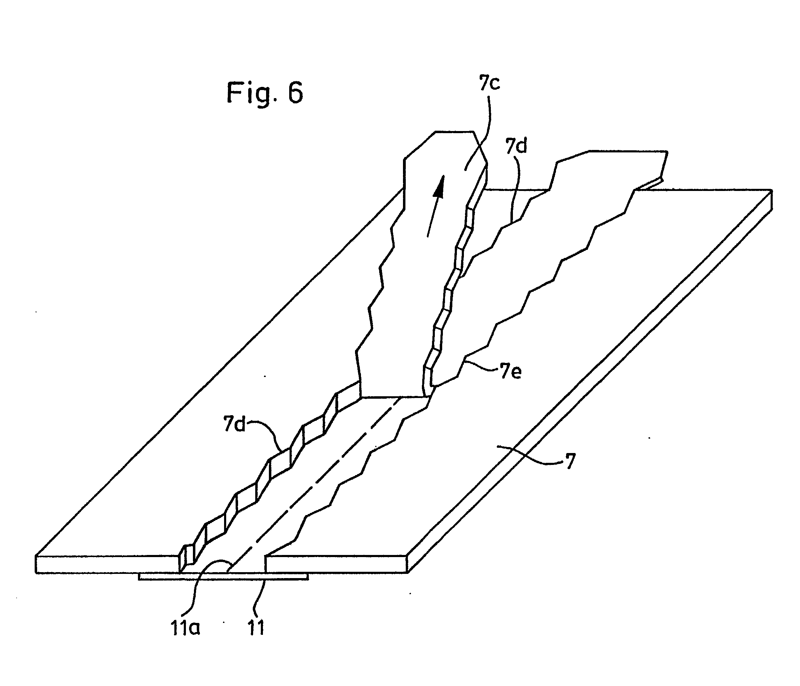

Das Ausführungsbeispiel nach Figur 6 unterscheidet sich von dem nach Figur 1 dadurch, daß nur ein kräftiges Kunststoffklebeband 7 zum Verkleben der Verschlußlasche 4b mit der Umhüllungsflachseite 4c vorgesehen ist. Dieses Klebeband 7 weist zwei Perforationsreihen 7d, 7e auf, die relativ stabil ausgebildet sind und zwischen sich das Reißband 7c einschließen. Unter dem Reißband 7c ist wiederum der perforierte Papierstreifen 11, die Perforationsreihe 7d, 7e überlappend, angeordnet. Anstelle des Papierstreifens 11 könnte auch ein sehr dünner Kunststoffstreifen mit der Perforation 11a verwendet werden. Die Wirkungsweise ist dieselbe wie die nach dem Ausführungsbeispiel nach den Figuren 1 bis 5. Nach dem Einlegen des Filmstapels in die Box 2a des Magazins 2 und Einhängen der Aufwickellasche 4a an der Aufwickelwelle 6 und Schließen der Rückwand 2d wird das Reißband 7c über die ganze Breite der Umhüllung 4, die in Figur 6 nicht gezeigt ist, aufgerissen. Verschlußlasche 4b und Umhüllungsflachseite 4c sind dann aber noch durch den perforierten Papierstreifen 11 lichtdicht zusammengehalten. Nach dem Schließen des Deckels 2b wird beim Betätigen der Aufwickelwelle 6 die Perforation 11a quer zu ihrer Länge aufgerissen, so daß die Umhüllung 4 abgezogen und aufgewickelt werden kann.

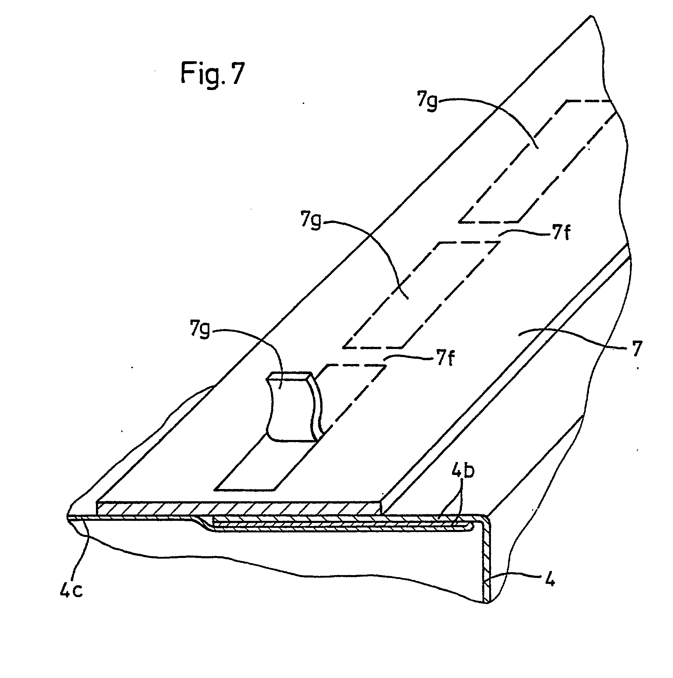

Das Ausführungsbeispiel nach Figur 7 schließlich unterscheidet sich von dem nach Figur 1 und dem nach Figur 6 dadurch, daß die Reißleine enthaltenden Klebestreifen 8a, 8b und der perforierte Papierstreifen 11 entfallen können. Hier ist das Klebeband 7 nämlich in einem nicht verklebten Bereich an der Grenze zwischen Verschlußlappen 4b und Umhüllungsflachseite 4c seiner Länge nach mit mehreren, voneinander durch schmale Stege 7f getrennten, perforierten, länglichen Rechtecken 7g versehen. Nach dem Einlegen in eine Magazinbox 2a werden diese als kleine Aufreißbänder wirkenden Rechtecke 7g der Reihe nach aufgerissen. Nun ist die Umhüllung 4, 4b, 4c nur noch durch die schmalen Querstege 7f lichtdicht zusammengehalten. Nach dem Verschließen eines Magazins 2 reißen diese Querstege 7f beim Drehen der Aufwickelwelle 6 ohne nennenswerten Kraftaufwand durch, so daß auch hier wieder die Situation nach Figur 5 auftritt, daß die Verschlußlasche 4b durch Reißen der Verklebung geöffnet wird und die Umhüllung 4 abgezogen werden kann.

Das Prinzip nach der vorliegenden Erfindung besteht also darin, daß die Verschlußlasche 4b einer Filmpackumhüllung 4 mit einer Umhüllungsflachseite verklebt wird und dabei auch dem Gewicht des Filmpacks entsprechend gesichert ist, daß nach dem Einlegen in ein Vorratsmagazin 2 und vor dessen Verschließen durch einen Aufreißvorgang diese Verbindung geschwächt, aber keineswegs voll aufgegeben wird und daß die verbleibende, geschwächte Verbindung nach dem Schließen des Magazins durch eine Abziehvorrichtung für die Umhüllung durchreißbar und die Hülle abziehbar ist.

Nach diesem Prinzip sind auch noch andere, der Einfachheit halber in den Figuren nicht gezeigte Ausführungsbeispiele möglich. So können bei dem Ausführungsbeispiel nach Figur 6 die Perforationen 7d entfallen, so daß das Klebeband 7 eine größere Ausgangsstabilität hat, und an deren Stellen unter dem Klebeband 7 je eine Reißleine unterlegt sein. Durch Hochreißen der beiden Reißleinen wird dann ein dem Streifen 7c entsprechender Streifen über der Perforation 11a des Papierstreifens 11 herausgerissen oder -geschnitten. Grundsätzlich könnte die magazinseitige Abziehvorrichtung auch aus einem lichtsicher ausgebildeten Schlitz bestehen, durch den die Aufwickellasche 4a gesteckt und dann durch Ziehen von Hand samt Umhüllung 4 herausgezogen wird.

## Patentansprüche

1. Lichtdichte, aufreißbare Umhüllung (4) für Stapel fotografischer oder röntgenologischer Blattfilme zum Einsetzen in ein Vorratsmagazin (2) eines Blattfilmkassetten-Beladegerätes, wobei das Vorratsmagazin (2) an einer einer aufreißbaren Umhüllungsseite gegenüberliegenden Seite eine Abziehvorrichtung (6, 10), vorzugsweise eine Aufwickelvorrichtung zum Entfernen der Umhüllung (4) durch Angreifen an einer Aufwickellasche (4a) derselben nach dem Verschließen des Vorratsmagazins (2) aufweist und wobei eine umgeschlagene Verschlußlasche (4b) der Umhüllung mit einer Umhüllungsflachseite (4c) mittels eines Klebebandes verklebt ist, dadurch gekennzeichnet, daß das Klebeband (7, 8a, 8b) längs eines seitlichen Längsstreifens (7a, 8a) mit der Umhüllungsflachseite (4c) und längs des anderen, hierzu parallelen seitlichen Längsstreifens (7b, 8b) mit der umgeschlagenen Verschlußlasche (4b) verklebt ist und in einem dazwischen liegenden Längsstreifenbereich (9a) durch eine Reißleine oder ein Reißband (9; 7c) aufreißbar ist und daß unter dem aufreißbaren Längsstreifenbereich (9) eine dünne Papier- oder Kunststoffolie (11) angeordnet ist, die eine in Richtung der Streifenlänge verlaufende Perforation (11a) aufweist, welche durch Zug senkrecht zur Richtung der Streifenlänge aufreißbar ist.

2. Umhüllung nach Anspruch 1, dadurch gekennzeichnet, daß die Reißleine oder das Reißband (7c) durch zwei zueinander parallele Perforationsreihen (7d, 7e) im Klebeband (7) gebildet wird.

3. Umhüllung nach Anspruch 1 oder 2, dadurch gekennzeichnet, daß das Klebeband durch ein mit einem die Reißleine oder das Reißband (9) enthaltenden Klebeband (8a, 8b) verklebtes Abdeckband (7) gebildet wird.

4. Lichtdichte, aufreißbare Umhüllung (4) für Stapel fotografischer oder röntgenologischer Blattfilme zum Einsetzen in ein Vorratsmagazin (2) eines Blattfilmkassetten-Beladegerätes, wobei das Vorratsmagazin (2) an einer einer aufreißbaren Umhüllungsseite gegenüberliegenden Seite eine Abziehvorrichtung (6, 10), vorzugsweise eine Aufwickelvorrichtung zum Entfernen der Umhüllung (4) durch Angreifen an einer Aufwickellasche (4a) derselben nach dem Verschließen des Vorratsmagazins (2) aufweist und wobei eine umgeschlagene Verschlußlasche (4b) der Umhüllung mit einer Umhüllungsflachseite (4c) mittels eines Klebebandes verklebt ist, dadurch gekennzeichnet, daß das Klebeband (7, 8a, 8b) längs eines seitlichen Längsstreifens (7a, 8a) mit der Umhüllungsflachseite (4c) und längs des anderen, hierzu parallelen seitlichen Längsstreifens (7b, 8b) mit der umgeschlagenen Verschlußlasche (4b) verklebt ist und in einem dazwischen liegenden Längsstreifenbereich (9a) durch dünne Querstege (7f) unterbrochene Reißbandstücke (7g) aufweist, und daß die Querstücke (7f) so schmal ausgebildet sind, daß sie durch Zug senkrecht zur Richtung der Streifenlänge abreißbar sind.

5. Umhüllung nach einem der vorhergehenden Ansprüche, dadurch gekennzeichnet, daß die Perforation (11a) der Papier- oder Kunststoffolie (11) bzw. die Querstege (7f) so dimensioniert sind, daß durch sie die Verschlußlasche (4b) nach dem Abreißen der Reißleinen (7c, 9) bzw. Reißleinenstücke (7g) verschlossen haltbar ist und daß sie durch an der Abziehvorrichtung (10, 6) des Vorratsmagazins (2) bei deren Betätigung auftretenden Zug abreißbar sind.

6. Umhüllung nach einem der Ansprüche 1 bis 3 oder 5, dadurch gekennzeichnet, daß die Papier- oder Kunststoffolie (11) breiter ist als der durch die Reißleine oder das Reißband (7c; 9) aufreißbare Streifen des Klebebandes und daß die Papier- oder Kunststoffolie (11) an ihren außerhalb des aufreißbaren Streifens liegenden Rändern wenigstens teilweise mit dem Klebeband (7 bzw. 8a, 8b) verklebt ist.

## Claims

1. Light-proof covering (4) which can be torn open for stacks of photographic or radiological sheet films to be inserted in a storage magazine (2) of a sheet film cassette loading apparatus, in which the storage magazine (2) has a take-off device (6, 10) on a side opposite to the side of the covering which can be torn open, the said take-off device being preferably a winding device for removing the covering (4) by gripping a winding tab (4a) of said covering after the storage magazine (2) has been closed and in which a closing flap (4b) which is folded over for closing the covering is glued to a flat side (4c) of the covering by means of an adhesive tape, characterised in that the adhesive tape (7, 8a, 8b) is glued along one lateral longitudinal strip (7a, 7b) to the flat side (4c) of the covering and along the other, parallel lateral longitudinal strip (7b, 8b) to the folded over closing flap (4b) and can be torn open along a longitudinal strip (9a) situated between the two aforesaid parallel strips by means of a tearing cord or band (9; 7c) and in that a thin sheet of paper or plastic (11) is arranged underneath the area of longitudinal strip (9) which can be torn open, this sheet having a perforation (11a) which extends along the length of the strip and can be torn open by a pull exerted in a direction perpendicular to the direction of the length of the strip.

2. Covering according to claim 1, characterised in that the tearing cord or band (7c) is formed by two parallel rows of perforations (7d, 7e) in the adhesive tape (7).

3. Covering according to claim 1 or 2, characterised in that the adhesive tape is formed by a covering tape (7) which is glued to the adhesive tape (8a, 8b) containing the tearing cord or tearing band (9).

4. Light-proof covering (4) which can be torn open for stacks of photographic or radiological sheet films for insertion in a storage magazine (2) of a sheet film cassette loading apparatus, in which the storage magazine (2) has a take-off device (6, 10), preferably a winding device, on a side opposite to a side of the covering which can be torn open, for the purpose of removing the covering by gripping a winding tab (4a) of the latter after the storage magazine (2) has been closed, and in which a closing flap (4b) which is folded over to close the covering is glued to one flat side (4c) of the covering by means of an adhesive tape, characterised in that the adhesive tape (7, 8a, 8b) is glued along one longitudinal strip thereof (7a, 8a) to the flat side of the covering and along its other lateral longitudinal strip (7b, 8b) parallel to the first to the folded over closing flap (4b) and has pieces of tear-off bands (7g) interrupted by thin transverse webs (7f) extending in longitudinal strip (9a) between the two aforeseaid strips, and in that the transverse elements (7f) are so narrow that they can be torn off by a pull exerted perpendicularly to the longitudinal direction of the strip.

5. Covering according to one of the preceding claims, characterised in that the perforations (11a) of the paper or plastic sheet (11) or the transverse webs (7f) are of such dimensions that they are capable of keeping the closing flap (4b) closed after the tearing cords (7c, 9) or tearing cord elements (7g) have been torn off and in that they can be torn off by a pull exerted on the take-off device (10, 6) of the storage magazine (2) when said device is actuated.

6. Covering according to one of the claims 1 to 3 or 5, characterised in that the paper or plastic sheet (11) is broader than the strip of adhesive tape which can be torn open by the tearing cord or tearing band (7c; 9) and in that the paper or plastic sheet (11) is at least partly glued to the adhesive tape (7 or 8a, 8b) at its edges which lie outside the strip which can be torn off.

## Revendications

1. Emballage (4) étanche à la lumière, pouvant être déchiré, pour une pile de films photographiques ou radiologiques en feuilles, destiné à être introduit dans un magasin de stockage (2) d'un appareil à chargement par cassettes de films en feuilles, le magasin de stockage (2) présentant, sur un côté opposé à un côté pouvant être déchiré de l'emballage, un dispositif d'enlèvement par traction (6, 10), un enrouloir de préférence, servant à enlever l'emballage (4) par action sur une languette d'enroulement (4a), ceci après la fermeture de magasin de stockage (2) et une languette de fermeture (4b) de l'emballage rabattue étant collée sur un côté plat (4c) de l'emballage au moyen d'une bande adhésive, caractérisé en ce que la bande adhésive (7, 8a, 8b) est collée le long d'une bande longitudinale latérale (7a, 8a) avec le côté plat (4c) de l'emballage et, le long de l'autre bande longitudinale latérale (7b, 8b) parallèle à la précédente, avec la languette de fermeture (4b) rabattue et peut être déchirée dans la zone d'une bande longitudinale (9a) intermédiaire par une corde ou une bande de déchirement (9; 7c) et en ce que, sous la zone de la bande longitudinale (9) qui peut être déchirée, est placée une feuille mince de papier ou de matière plastique (11), qui présente une perforation (11a) allant dans le sens de la longueur de la bande, perforation qui peut être arrachée par traction transversale par rapport à la longueur de la bande.

2. Emballage selon la revendication 1, caractérisé en ce que la corde ou la bande de déchirement (7c) est constituée dans la bande adhésive (7) par deux lignes de perforation (7d, 7e) parallèles.

3. Emballage selon la revendication 1 ou 2, caractérisé en ce que la bande adhésive est constituée par une bande de recouvrement (7) collée avec une bande adhésive (8a, 8b) contenant la corde ou la bande de déchirement (9).

4. Emballage (4) étanche à la lumière, pouvant être déchiré, pour une pile de films photographiques ou radiologiques en feuilles, destiné à être introduit dans un magasin de stockage (2) d'un appareil à chargement par cassettes de films en feuilles, le magasin de stockage (2) présentant, sur un côté opposé à un côté pouvant être déchiré de l'emballage, un dispositif d'enlèvement par traction (6, 10), un enrouloir de préférence, servant à enlever l'emballage (4) par action sur une languette d'enroulement (4a), ceci aprés la fermeture du magasin de stockage (2) et une languette de fermeture (4b) de l'emballage rabattue étant collée sur un côté plat (4c) de l'emballage au moyen d'une bande adhésive, caractérisé en ce que la bande adhésive (7, 8a, 8b) est collée, le long d'une bande longitudinale latérale (7a, 8a), avec le côté plat (4c) de l'emballage et, le long de l'autre bande longitudinale latérale (7b, 8b) paralléle à la précédente, avec la languette de fermeture (4b) rabattue et présente, dans la zone d'une bande longitudinale intermédiaire (9a), des portions (7g) de bande de déchirement séparées par d'étroites barrettes transversales (7f) et en ce que celles-ci (7f) sont si étroites qu'elles peuvent être déchirées par traction perpendiculaire à la direction longitudinale de la bande.

5. Emballage selon l'une des revendications précédentes, caractérisé en ce que la perforation (11a) de la feuille de papier ou de matière plastique (11) et les barrettes transversales (7f) sont dimensionnées de telle sorte qu'elles maintiennent fermée la languette de fermeture (4b) après que les cordes de déchirement (7c, 9) ou les portions de corde de déchirement (7g) ont été arrachées et en ce qu'elles sont arrachées par traction due à la mise en œuvre du dispositif d'enlèvement par traction (10, 6) du magasin de stockage (2).

6. Emballage selon l'une des revendications 1 à 3 ou 5, caractérisé en ce que la feuille de papier ou de matière plastique (11) est plus large que, dans la bande adhésive, la bande pouvant être déchirée par la corde ou la bande de déchirement (7c; 9) et en ce que la feuille de papier ou de matière plastique (11) est collée, partiellement au moins, avec la bande adhésive (7 et 8a, 8b), sur ses bords situés à l'extérieur de la bande qui peut être déchirée.

Fig. 1

Fig. 2

Fig. 3

Fig. 4

Fig. 5

EP 0 242 670 B1

Fig. 6

EP 0 242 670 B1

Fig. 7